# NEUE EUROPÄISCHE PATENTSCHRIFT

(11) **EP 3 470 457 B2**
(45) Veröffentlichungstag und Bekanntmachung des Hinweises auf die Entscheidung über den Einspruch: **20.09.2023**
(45) Hinweis auf die Patenterteilung: 06.01.2021
(21) Anmeldenummer: 17195625.3
(22) Anmeldetag: 10.10.2017
(51) Int. Cl.: C08K 3/04, B60C 1/00

(54) **SCHWEFELVERNETZBARE KAUTSCHUKMISCHUNG, VULKANISAT DER KAUTSCHUKMISCHUNG UND FAHRZEUGREIFEN**
SULPHUR-LINKABLE RUBBER COMPOUND, VULCANIZATE OF THE RUBBER COMPOUND AND VEHICLE TYRES
MÉLANGE DE CAOUTCHOUC RÉTICULABLE AU SOUFRE, VULCANISATION DE MÉLANGE DE CAOUTCHOUC ET PNEUMATIQUE POUR VÉHICULE

(43) Veröffentlichungstag der Anmeldung: 17.04.2019
(73) Patentinhaber: Continental Reifen Deutschland GmbH, 30165 Hannover (DE)
(72) Erfinder: Hojdis, Nils Walter, 30161 Hannover (DE); Recker, Carla, 30167 Hannover (DE); Wark, Michael, 26122 Oldenburg (DE); Multhaupt, Hendrik, 26129 Oldenburg (DE)

(56) Entgegenhaltungen:
- EP-A1- 3 243 877
- WO-A1-2017/085278
- DE-A1-102016 201 801
- S. J. TEH et al.: "ZnCl2/NaCl-Catalysed Hydrothermal Carbonization of Glucose and Oil Palm Shell Fibe", Nanosci. Nanotechnol. Lett., vol. 7, 2015, pages 611-615,

## Beschreibung

Die Erfindung betrifft eine schwefelvernetzbare Kautschukmischung, deren Vulkanisat und einen Fahrzeugreifen.

Es ist bekannt, dass in Kautschukmischungen von Reifen unterschiedliche verstärkende (aktive) oder inaktive Füllstoffe eingesetzt werden. Hiermit sollen die Eigenschaften des Reifens, wie z. B. der Rollwiderstand das Abriebverhalten oder Griffeigenschaften, optimiert werden. Zu den verstärkenden Füllstoffen zählen insbesondere Industrieruße und Kieselsäuren. Inaktive Füllstoffe umfassen eine Vielzahl von anorganischen Stoffen, wie insbesondere Silikate, Calciumcarbonate. Industrieruße basieren auf Kohlenstoff und werden größtenteils aus den Rohstoffen Erdgas, Erdöl oder Steinkohleteerprodukten gewonnen. Hierdurch ist eine Abhängigkeit der endlichen natürlichen, fossilen Vorkommen gegeben. Des Weiteren erfolgt die Spaltung der Kohlenwasserstoffe zu den nutzbaren Edukten thermisch unter hohem Energieaufwand, was sich in hohen Prozesskosten widerspiegelt. Der größte Teil wird dabei durch unvollständige Verbrennung nach dem Furnace-Verfahren hergestellt, bei dem unter anderem das giftige Gas Kohlenmonoxid entsteht.

Der vorliegenden Erfindung liegt daher die Aufgabe zugrunde, eine schwefelvernetzbare Kautschukmischung bereitzustellen, die einen Ersatzfüllstoff für Industrieruß auf Basis nachwachsender Rohstoffe enthält und gleichzeitig für den Einsatz in Fahrzeugreifen geeignet ist. Hierzu sollte die Kautschukmischung im Vergleich zu einer ungefüllten Kautschukmischung, also einer Kautschukmischung ohne Füllstoff, eine verbesserte Steifigkeit aufweisen.

Gelöst wird die Aufgabe dadurch, dass die schwefelvernetzbare Kautschukmischung wenigstens folgende Bestandteile enthält:
- Wenigstens einen Dienkautschuk;
- Wenigstens eine Kohle (HTC-Kohle), die mittels hydrothermaler Karbonisierung von wenigstens einer Ausgangssubstanz hergestellt ist;
wobei bei der hydrothermalen Karbonisierung wenigstens ein Metallhalogenid verwendet wird, wobei die hydrothermale Karbonisierung bei einer Temperatur von 210 bis 230 °C durchgeführt wird, und wobei die Kohle eine Stickstoff-Oberfläche (BET-Oberfläche gemäß DIN ISO 9277) von 20 bis 200 m²/g aufweist.

Der Vorteil der Erfindung liegt darin, dass HTC-Kohle wie unten erläutert nicht wie Industrieruße aus fossilen Rohstoffen hergestellt ist und das Verfahren zu deren Herstellung vergleichsweise umweltfreundlich ist. Bei der Herstellung der HTC-Kohle entsteht reaktionsbedingt kein zusätzliches Kohlenstoffdioxid, was einen positiven Effekt auf die ansonsten stetig steigenden globalen CO₂-Emissionen hat. Die niedrige Reaktionstemperatur und die Möglichkeit zum Recycling des anfallenden Prozesswassers führen zu geringeren Verfahrenskosten. Hierdurch ist es möglich, erneuerbare Rohstoffe in Kautschukmischungen als Füllstoff einzusetzen und somit die Kautschukmischungen "grüner" zu gestalten.

Dabei zeigt sich gleichzeitig eine Verstärkung der Kautschukmischung im Vergleich zu ungefüllten Kautschukmischungen. Die HTC-Kohle wirkt also als verstärkender Füllstoff.

Die Abkürzung "HTC" steht für hydrothermale Karbonisierung, welche im Stand der Technik bekannt ist. Hierbei wird wenigstens eine Ausgangssubstanz zusammen mit Wasser in einer geschlossenen druck- und hitzebeständigen Vorrichtung, wie insbesondere einem Autoklaven, erhitzt. Das Ausgangsgemisch ist somit eine Suspension und/oder Lösung der Ausgangssubstanz(en) in Wasser. Dabei wird durch das Erhitzen und dem damit erzeugten Wasserdampf ein erhöhter Druck erzeugt, der insbesondere von der Temperatur und dem Füllgrad der Vorrichtung abhängig ist. Bei der hydrothermalen Karbonisierung wird der Prozess, der in der Natur in vielen Millionen von Jahren zur Entstehung von Braunkohle führt, innerhalb kurzer Zeit, meist wenigen Stunden, nachgeahmt.

Unter "HTC-Kohle" wird der Feststoff verstanden, der das Produkt der hydrothermalen Karbonisierung ist. Im Rahmen der vorliegenden Erfindung werden auch die Begriffe "Hydrokohle" oder "Kohle" verwendet.

Mögliche Verfahren sind beispielsweise in der EP 2134821 A1, EP 2474591 A1, WO 2000 9127721 A1 und der WO 2010 006881 A1 beschrieben.

Prinzipiell ist jede HTC-Kohle als Füllstoff für die erfindungsgemäße Kautschukmischung geeignet. Im Folgenden werden vorteilhafte HTC-Kohlen beschrieben die durch ihre Eigenschaften und/oder ihren Herstellungsprozess näher beschrieben werden.

Erfindungsgemäß wird bei der hydrothermalen Karbonisierung wenigstens ein Salz zu dem Gemisch aus Ausgangssubstanz und Wasser in der druck- und hitzebeständigen Vorrichtung dazu gegeben. Durch die Verwendung wenigstens eines Salzes werden überraschenderweise bessere Eigenschaften der HTC-Kohle erzielt, sodass diese in der Kautschukmischung ebenfalls zu verbesserten Eigenschaften führt. Insbesondere wird die Steifigkeit der Kautschukmischung weiter erhöht. HTC-Kohle, die unter Verwendung wenigstens eines Salzes hergestellt wurde, wirkt somit verstärkender in der Kautschukmischung. Es hat sich gezeigt, dass eine derartige HTC-Kohle eine vergleichsweise hohe Oberfläche bei optimierter Oberflächenrauheit und-Funktionalität aufweist.

Gleichzeitig erfolgt eine Erhöhung des Kohlenstoffgehaltes der erhaltenen Kohle durch Zugabe des Salzes.

Als Füllstoffe für Reifenmischungen bekannte Industrieruße haben einen Kohlenstoffgehalt von ca. 99 Gew.-%. Bei Verwendung von Kohlen anstelle von Industrierußen ist es erstrebenswert, eine Kohle mit einem möglichst hohen Kohlenstoffgehalt einzusetzen, um ein möglichst vergleichbares Eigenschaftsniveau der Kautschukmischungen zu erzielen. Biomassen weisen einen Kohlenstoffgehalt von ca. 40 Gew.-% auf. HTC-Kohlen, die ohne ein Salz hergestellt wurden, weisen einen Kohlenstoffgehalt von ca. 50 Gew.-% auf, während HTC-Kohlen, die unter Verwendung wenigstens eines Salzes hergestellt wurden, einen erhöhten Kohlenstoffgehalt, ca. 60 Gew.-%, aufweisen.

Unter "Salz" im Rahmen der vorliegenden Erfindung handelt es sich um wenigstens ein Metallhalogenid, besonders bevorzugt wenigstens ein Metallchlorid.

Bei der Verwendung wenigstens eines Salzes bei der hydrothermalen Karbonisierung beträgt das Gewichtsverhältnis von Salz zu Ausgangssubstanz bevorzugt von 100 zu 0,1 bis 0,1 zu 100, besonders bevorzugt 0,1 zu 2 bis 2 zu 0,1.

Gemäß einer ganz besonders bevorzugten Ausführungsform der Erfindung beträgt das Gewichtsverhältnis von Salz zu Ausgangssubstanz von 0,3 bis 3,0 zu 1, wiederum bevorzugt 0,7 bis 2,5 zu 1, wiederum besonders bevorzugt 0,7 bis 1,5 zu 1, beispielsweise 1,2 zu 1.

Dabei muss nicht die gesamte Menge des eingesetzten Salzes in dem umgebenden Wasser gelöst sein. Es ist auch denkbar, dass das Salz vollständig oder teilweise ungelöst ist. Bevorzugt weist es hierbei einen Schmelzpunkt auf, der der Reaktionstemperatur im HTC-Prozess entspricht, also beispielsweise im Bereich von 170 bis 230 °C.

Gemäß einer vorteilhaften Ausführungsform der Erfindung kann auch ein Salzgemisch mit einem derartigen Schmelzpunkt eingesetzt werden, welches im Vergleich zu den reinen Salzen einen verringerten Schmelzpunkt aufweist (eutektisches Gemisch).

Hierbei würde sich das Gewichtsverhältnis von Salzgemisch zu Ausgangssubstanz bevorzugt in oben beschriebenen Bereichen befinden, wobei sich die Zusammensetzung der verschiedenen Salze im Gemisch, wie dem Fachmann bekannt, über das molare Verhältnis einstellen lässt und beispielsweise im Bereich eines eutektischen Verhältnisses liegt.

Gemäß einer vorteilhaften Ausführungsform der Erfindung handelt es sich bei dem wenigstens einen Salz wenigstens um ZnCl₂. Insbesondere bei Verwendung von ZnCl₂ wird eine HTC-Kohle erhalten, die zu besonders guten Eigenschaften der Kautschukmischung führt.

Gemäß einer vorteilhaften Ausführungsform der Erfindung wird nur ZnCl₂ als Salz verwendet, womit sich sehr gute Eigenschaften der Kautschukmischung ergeben.

Auch bei Verwendung eines eutektischen Salzgemisches ist bevorzugt eines der Salze ZnCl₂.

Gemäß einer weiteren vorteilhaften Ausführungsform der Erfindung wird als wenigstens ein Metallhalogenid ein Salz verwendet, welches ausgewählt ist aus der Gruppe bestehend aus LiCl, NaCl und KCl. Besonders bevorzugt ist hierbei KCl.

Auch die Verwendung der genannten Salze, bevorzugt KCl, führt zu verbesserten Eigenschaften der Kautschukmischung.

Gemäß einer weiteren vorteilhaften Ausführungsform der Erfindung werden ZnCl₂ und wenigstens ein Salz aus der Gruppe bestehend aus LiCl, NaCl und KCl, im Gemisch verwendet.

Ein Gemisch aus ZnCl₂ und einem Salz ausgewählt aus der Gruppe bestehend aus LiCl, NaCl und KCl ist somit ein bevorzugtes Salzgemisch im Rahmen der vorliegenden Erfindung. Hierbei können die molaren Anteile von XCl (mit X = Li, Na oder K) zu ZnCl₂ von 1 % XCl und 99 % ZnCl₂ bis zu 99 % XCl und 1 % ZnCl₂ betragen.

Ein Gemisch aus ZnCl₂ und KCl ist ein besonders bevorzugtes Salzgemisch, wobei die genannten molaren Anteile denkbar sind.

Beispielsweise kann ein Gemisch von 50 mol-% ZnCl₂ und 50 mol-% KCl verwendet werden.

Beispielsweise kann - wie beschrieben - ein eutektisches Gemisch aus ZnCl₂ und KCl verwendet werden, welches 45 mol-% KCl und 55 mol-% ZnCl₂ umfasst. Dies entspricht einem Gewichtsverhältnis von KCl zu ZnCl₂ von 1 zu 2,2.

Das Salz oder die Salzgemische können durch Herstellen von wässrigen Lösungen der Salze in den gewünschten molaren Verhältnissen bereitgestellt werden.

Das Salz oder die Salzgemische können aber auch ungelöst oder teilweise gelöst zu den entsprechenden Ausgangssubstanzen, beispielsweise feuchten Biomassen, zugegeben werden.

Unter der "Oberfläche" der HTC-Kohle wird im Rahmen der vorliegenden Erfindung die Stickstoff-Oberfläche (BET-Oberfläche gemäß DIN ISO 9277, Berechnung über die Brunauer-Emmett-Teller (BET)-Isotherme) verstanden.

Bevorzugt weist die in der erfindungsgemäßen Kautschukmischung vorhandene HTC-Kohle eine BET-Oberfläche von 50 bis 200 m² /g, wiederum ganz besonders bevorzugt 50 bis 150 m² /g auf.

Erfindungsgemäß sind somit HTC-Kohlen mit einer vergleichsweise geringen BET-Oberfläche umfasst.

Eine HTC-Kohle, die unter Verwendung wenigstens eines Salzes hergestellt wurde, weist erfindungsgemäß eine BET-Oberfläche von 20 bis 200 m² /g, bevorzugt 30 bis 200 m² /g, besonders bevorzugt 50 bis 200 m² /g, insbesondere 80 bis 200 m² /g, insbesondere bevorzugt 90 bis 140 m² /g auf, und ist erfindungsgemäß in der Kautschukmischung enthalten.

Erfindungsgemäß sind somit HTC-Kohlen mit einer vergleichsweise geringen BET-Oberfläche umfasst, wie z. B. HTC-Kohlen, die ohne Verwendung eines Salzes hergestellt werden und überwiegend eine BET-Oberfläche im Bereich von 1 bis 49 m²/g aufweisen. Ebenso sind HTC-Kohlen umfasst, die eine vergleichsweise hohe Oberfläche aufweisen. Aktivierte HTC-Kohlen weisen beispielsweise eine BET-Oberfläche von 500 bis 1000 m²/g auf.

Eine HTC-Kohle, die unter Verwendung wenigstens eines Salzes hergestellt wurde, weist bevorzugt eine BET-Oberfläche von 20 bis 200 m²/g, besonders bevorzugt 30 bis 200 m²/g, ganz besonders bevorzugt 50 bis 200 m²/g, insbesondere 80 bis 200 m²/g, insbesondere bevorzugt 90 bis 140 m²/g auf, und ist gemäß einer besonders vorteilhaften Ausführungsform der Erfindung in der Kautschukmischung enthalten.

Eine HTC-Kohle, die mittels wenigstens eines Salzes hergestellt wurde, weist ferner eine verstärkte Oberflächenrauheit und eine optimierte Oberflächenfunktionalität auf.

Die Oberflächenrauheit lässt sich qualitativ anhand von TEM-Bildern durch Vergleich bewerten, wie unten bei den Beispielen erläutert.

Die Oberflächenfunktionalität kann durch Auswertung von FTIR-Spektren ermittelt werden. "FTIR" steht dabei für Fourier-Transformations-Infrarot. Mittels FTIR-Spektren können wie dem Fachmann bekannt aufgrund der unterschiedlichen Absorptionsbanden (unterschiedliches Schwingungsverhalten) unterschiedliche chemische Bindungen charakterisiert werden.

Unter "Oberflächenfunktionalität" wird im Rahmen der vorliegenden Erfindung verstanden, dass die Kohle insbesondere an ihrer Oberfläche funktionelle Gruppen aufweist. Bei den funktionellen Gruppen handelt es sich um organische funktionelle Gruppen, die aus Kohlenstoff und Sauerstoff sowie ggf. weiteren Heteroatomen, wie Stickstoff, Schwefel oder Halogeniden, wie insbesondere Cl, aufgebaut sind. Kohlenstoff-Sauerstoff-haltige funktionelle Gruppen sind insbesondere Alkohole -C-OH, und Gruppen mit Carbonyl-Verbindungen C=O, wie beispielsweise Ketone R₂C=O, Aldehyde RHC=O, Carboxy-Gruppen RC(=O)OH, Ester -C(=O)OR, wobei R allgemein Reste sind, die organisch sein können und Heteroatome aufweisen können, oder Heteroatome darstellen können.

Kohlen können - wie im Stand der Technik bekannt - aktiviert werden, wobei die zunächst hergestellten Kohlen Wasserdampf ausgesetzt werden, um Poren frei zu setzen und somit die freie Oberfläche zu erhöhen. Dies hat zugleich die Nachteile, dass dabei die beschriebenen funktionellen Gruppen von der Oberfläche entfernt werden und die Aktivierung einen zusätzlichen Verfahrensschritt bedeutet, welcher zeit- und energieaufwändig ist.

Ein Vorteil der vorliegenden Erfindung besteht darin, dass die HTC-Kohlen der Kautschukmischung nicht aktiviert werden müssen, um gute Eigenschaften, insbesondere hinsichtlich der Verstärkung, zu erzielen. Dies gilt insbesondere für die HTC-Kohlen, die unter Verwendung wenigstens eines Salzes hergestellt wurden.

HTC-Kohlen, insbesondere solche, die unter Verwendung wenigstens eines Salzes hergestellt wurden, stellen einen guten Kompromiss aus Größe der Oberfläche und Funktionalität dar und sind sehr gut als Füllstoffe für Kautschukmischungen, insbesondere für Fahrzeugreifen, geeignet.

Gemäß einer vorteilhaften Ausführungsform der Erfindung werden wenigstens eine Biomasse und/oder deren Abbauprodukt(e) als Ausgangssubstanz verwendet. Bei den Biomassen kann es sich um alle denkbaren Biomassen handeln, insbesondere solche, die als Abfall anfallen.

Es kann sich dabei um feuchte oder trockene Biomassen handeln.

Feuchte Biomassen sind beispielsweise Klärschlamm oder Dung oder sonstige feuchte Abfallprodukte, insbesondere landwirtschaftliche Abfallprodukte.

Trockene Biomassen sind alle denkbaren Abfälle aus Schalen, Hölzer, Sträuchern und Pflanzen.

Bei der hydrothermalen Karbonisierung wird der jeweiligen Biomasseje nach bereits enthaltenem Wassergehalt eine geeignete Menge an Wasser zugesetzt, wobei es auch denkbar ist, dass eine feuchte Biomasse ohne Wasserzusatz direkt verwendet wird.

Gemäß vorteilhafter Ausführungsformen ist die Biomasse ausgewählt aus der Gruppe umfassend, bevorzugt bestehend aus, Getreideschalen - wie beispielsweise Reisschalen-, Nussschalen, Fruchtschalen - wie beispielsweise Kokosnussschalen-, Grünschnitt, Holzabfällen wie Sägemehl und Algen.

Grünschnitt umfasst sämtliche Pflanzen, inklusive Sträuchern, Blumen, Unkräutern, wie Löwenzahn.

Unter "Abbauprodukte" sind sämtliche Substanzen und Substanzgemische zu verstehen, die durch eine vollständige oder teilweise Zersetzung von Biomassen entstehen und noch zu Kohle umgesetzt werden können.

Gemäß vorteilhafter Ausführungsformen wird zumindest eine Ausgangssubstanz aus der Gruppe bestehend aus Lignin, Cellulose, Hemicellulose und Zucker, insbesondere Glucose, gewählt. Diese Substanzen können als Abbauprodukte von Biomassen anfallen oder als sonstiger Abfall anfallen.

Das Verhältnis von Biomasse zu Wasser bei der hydrothermalen Karbonisierung richtet sich nach der Art der Ausgangssubstanz. Bei Einsatz von Glucose, welches sich in Wasser löst, kann ein hoher Gewichtsanteil von Glucose eingesetzt werden. Bei der Verwendung von Grünschnitt oder anderen festen unlöslichen Ausgangssubstanzen wird das Verhältnis zweckmäßig so gewählt, dass die Ausgangssubstanz zumindest von Wasser benetzt ist.

Die hydrothermale Karbonisierung wird erfindungsgemäß bei einer Temperatur von 210 bis 230 °C, beispielsweise 220 °C, durchgeführt. Hierdurch und je nach Volumen des Gemisches im Autoklaven wird ein erhöhter Druck erzeugt, der dem Dampfdruck von Wasser bei der jeweiligen Temperatur entspricht. Bevorzugt sind dabei 2 bis 20 bar, besonders bevorzugt 8 bis 20 bar.

Die Reaktion verläuft bevorzugt über einen Zeitraum von 30 Minuten bis 72 Stunden, besonders bevorzugt 1 bis 12 Stunden, ganz besonders bevorzugt 3 bis 5 Stunden, beispielsweise 4 Stunden. Bei einer zu kurzen Reaktionszeit wird noch keine Kohle erhalten. Bei einer zu langen Reaktionszeit ist das Verfahren ökologisch und ökonomisch weniger sinnvoll.

Wie bereits erwähnt, erfolgt die hydrothermale Karbonisierung in einer druck- und hitzebeständigen Vorrichtung, beispielsweise in einem Autoklaven.

Das Verfahren der hydrothermalen Karbonisierung kann zudem kontinuierlich oder diskontinuierlich (z. B. unter Verwendung eines Autoklaven) erfolgen.

Die hergestellte HTC-Kohle wird bevorzugt aufgearbeitet. Dies umfasstinsbesondere das Waschen mit Wasser, das Trocknen sowie die Zerkleinerung durch z.B. Mörsern. Geeignete Verfahrensschritte und Vorrichtungen hierzu sind dem Fachmann bekannt.

Die erfindungsgemäße Kautschukmischung enthält bevorzugt 5 bis 100 phr wenigstens einer HTC-Kohle, wobei auch ein Gemisch von zwei oder mehreren HTC-Kohlen denkbar ist.

Gemäß einer besonders bevorzugten Ausführungsform der Erfindung enthält die Kautschukmischung 30 bis 80 phr, ganz besonders bevorzugt 30 bis 70 phr, wiederum bevorzugt 35 bis 65 phr, wiederum besonders bevorzugt 45 bis 65 phr, wenigstens einer HTC-Kohle.

Insbesondere wenn HTC-Kohle in vergleichsweise hohen Mengen, wie 50 bis 100 phr, in der Kautschukmischung enthalten ist, enthält diese einen hohen Anteil von Füllstoff aus nachhaltigen Quellen und entsprechend wenig Füllstoff aus fossilen Rohstoffen.

Die Menge an HTC-Kohle richtet sich aber auch nach dem jeweiligen Anwendungsgebiet der Kautschukmischung. In Fahrzeugreifen kommen üblicherweise in den einzelnen Bauteilen verschiedene Kautschukmischungen mit unterschiedlichem Füllstoffgehalt zum Einsatz.

Gemäß einer weiteren besonders bevorzugten Ausführungsform der Erfindung enthält die Kautschukmischung 5 bis 50 phr, bevorzugt 5 bis 30 phr, wiederum bevorzugt 5 bis 20 phr wenigstens einer HTC-Kohle. Eine derartige Kautschukmischung ist insbesondere für Laufstreifen oder andere Bauteile wie die Seitenwand von Fahrzeugreifen geeignet und enthält hierzu bevorzugt zudem 10 bis 200 phr wenigstens eines Rußes und/oder wenigstens einer Kieselsäure.

Gemäß einer bevorzugten Ausführungsform der Erfindung enthält die Kautschukmischung neben der HTC-Kohle keinen weiteren verstärkenden Füllstoff, insbesondere 0 phr Industrieruß und 0 phr Kieselsäure. Diese Kautschukmischung ist mit ihrem verstärkenden Füllstoffsystem hinsichtlich Umweltfreundlichkeit und Nachhaltigkeit optimiert.

Gemäß einer weiteren bevorzugten Ausführungsform der Erfindung enthält die Kautschukmischung wenigstens einen weiteren verstärkenden Füllstoff, der bevorzugt ausgewählt ist aus Kieselsäure und Industrieruß, wobei auch ein Gemisch wenigstens einer oder mehrerer Kieselsäure und/oder wenigstens eines oder mehrerer Industrieruße enthalten sein kann.

Gemäß einer vorteilhaften Weiterbildung der Erfindung enthält die Kautschukmischung wenigstens einen Industrieruß in Mengen von 5 bis 300 phr bevorzugt 10 bis 200 phr, besonders bevorzugt 10 bis 100, als Füllstoff.

Gemäß einer weiteren vorteilhaften Weiterbildung der Erfindung enthält die Kautschukmischung wenigstens eine Kieselsäure in Mengen von 5 bis 300 phr, bevorzugt 10 bis 200 phr, besonders bevorzugt 10 bis 100 phr, als Füllstoff.

Gemäß einer weiteren vorteilhaften Weiterbildung der Erfindung enthält die Kautschukmischung wenigstens eine Kieselsäure in Mengen von 2 bis 300 phr, bevorzugt 20 bis 200 phr, besonders bevorzugt 30 bis 100 phr, und wenigstens einen Industrieruß in Mengen von 5 bis 30 phr, bevorzugt 5 bis 15 phr, als Füllstoffe.

Gemäß einer weiteren vorteilhaften Weiterbildung der Erfindung enthält die Kautschukmischung wenigstens einen Industrieruß in Mengen von 10 bis 300 phr, bevorzugt 10 bis 200 phr, besonders bevorzugt 30 bis 100 phr, und wenigstens eine Kieselsäure in Mengen von 5 bis 30 phr, bevorzugt 5 bis 20 phr, als Füllstoffe.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 70 bis 235 m²/g und ganz besonders bevorzugt von 70 bis 205 m²/g, und eine CTAB-Oberfläche (gemäß ASTM D 3765) von 30 bis 400 m²/g, bevorzugt von 30 bis 255 m²/g, besonders bevorzugt von 65 bis 230 m²/g und ganz besonders bevorzugt von 65 bis 200 m²/g, aufweist.

Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay).

Enthält die erfindungsgemäße Kautschukmischung Industrieruß, wird bevorzugt ein Ruß eingesetzt, der eine Jodadsorptionszahl gemäß ASTM D 1510 von 30 g/kg bis 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 60 bis 200 ml/100 g, bevorzugt 70 bis 200 ml/100g, besonders bevorzugt 90 bis 150 ml/100g, aufweist.

Die erfindungsgemäße Kautschukmischung kann ferner weitere ggf. verstärkende Füllstoffe enthalten, wie z.B. Graphit und Graphene und sogenannte "carbon-silica dualphase filler" oder z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen). Die erfindungsgemäße Kautschukmischung kann ferner nicht verstärkende Füllstoffe enthalten. Zu den nicht verstärkenden Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Zinkoxid gehört im Rahmen der vorliegenden Erfindung nicht zu den Füllstoffen.

Die erfindungsgemäße Kautschukmischung enthält wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der wenigstens eine weitere Dienkautschuk ist dabei bevorzugt ausgewählt aus der Gruppe bestehend aus natürlichem Polyisopren (NR) und/oder synthetischem Polyisopren (IR) und/oder epoxidiertem Polyisopren und/oder Butadien-Kautschuk (BR) und/oder Butadien-Isopren-Kautschuk und/oder lösungspolymerisiertem Styrol-Butadien-Kautschuk (SSBR) und/oder emulsionspolymerisiertem Styrol-Butadien-Kautschuk (ESBR) und/oder Styrol-Isopren-Kautschuk und/oder Flüssigkautschuken mit einem Molekulargewicht M_{w} von größerals 20000 g/mol und/oder HalobutylKautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem Acrylnitrilbutadien-Kautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Hornprofil, sowie in sonstigen sogenannten Body-Bauteilen.

Hierzu ist der Dienkautschuk vorzugsweise ausgewählt aus der Gruppe bestehend aus synthetischem Polyisopren (IR) und natürlichem Polyisopren (NR) und Styrol-Butadien-Kautschuk (SBR) und Polybutadien (BR) und Butylkautschuk (IIR) und Halobutylkautschuk.

Besonders bevorzugt ist der Dienkautschuk hierbei ausgewählt aus der Gruppe bestehend aus synthetischem Polyisopren (IR) und natürlichem Polyisopren (NR) und Styrol-Butadien-Kautschuk (SBR) und Polybutadien (BR), wodurch sich besonders gute Eigenschaften im Hinblick auf die Anforderungen im Fahrzeugreifen ergeben.

Gemäß einer vorteilhaften Ausführungsform der Erfindung enthält die Kautschukmischung 50 bis 100 phr wenigstens eines Styrol-Butadien-Kautschuks (SBR), bevorzugt SSBRs.

Gemäß einer vorteilhaften Ausführungsform der Erfindung enthält die Kautschukmischung 5 bis 50 phr, bevorzugt 10 bis 40 phr, beispielsweise 10 bis 30 phr, wenigstens eines Styrol-Butadien-Kautschuks (SBR), bevorzugt SSBRs.

Gemäß einer weiteren vorteilhaften Ausführungsform der Erfindung enthält die Kautschukmischung 5 bis 100 phr, bevorzugt 5 bis 50 phr, besonders bevorzugt 5 bis 40 phr, beispielsweise 10 bis 30 phr, wenigstens eines Butadien-Kautschuks (BR).

Gemäß einer weiteren vorteilhaften Ausführungsform der Erfindung enthält die Kautschukmischung 50 bis 100 phr wenigstens eines Naturkautschuks-Kautschuks (NR).

Mit den genannten Ausführungsformen der Kautschuke ist es möglich vergleichsweise große Mengen an HTC-Kohle von 30 bis 100 phr, bzw. bevorzugten Mengen s. oben, einzusetzen und dabei hinsichtlich Nachhaltigkeit optimierte Kautschukmischungen für Fahrzeugreifen bereitzustellen.

Sowohl bei natürlichem Polyisopren (NR, Naturkautschuk) als auch bei synthetischem Polyisopren (IR) kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Für den Fall, dass Kieselsäure in der Kautschukmischung enthalten ist, enthält die Kautschukmischung gemäß einer bevorzugten Ausführungsform wenigstens ein Silan-Kupplungsagens. Silan-Kupplungsagenzien werden im Rahmen der vorliegenden Erfindung auch als "Silan" bezeichnet.

Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Gemäß einer vorteilhaften Weiterbildung der Erfindung enthält die Kautschukmischung wenigstens ein Silan. Hiermit werden vorteilhafte physikalische Eigenschaften der hinsichtlich Nachhaltigkeit optimierten Kautschukmischung erzielt.

Gemäß einer weiteren vorteilhaften Weiterbildung der Erfindung ist die Kautschukmischung frei von Silan-Kupplungsagenzien. Hierdurch wird, insbesondere im Vergleich zu einer Mischung enthaltend den Ruß N 660 statt der HTC-Kohle, eine erhöhte Zug-Dehnungs-Kurve erzielt.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Es können in der Kautschukmischung 0 bis 100 phr, bevorzugt 0,1 bis 80 phr, besonders bevorzugt 0,1 bis 70 phr und ganz besonders bevorzugt 0,1 bis 50 phr, zumindest eines Weichmachers vorhanden sein.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Gemäß einer bevorzugten Ausführungsform der Erfindung enthält die Kautschukmischung wenigstens ein Flüssig-Polymer als Weichmacher.

Gemäß einer bevorzugten Ausführungsform der Erfindung enthält die Kautschukmischung wenigstens ein Kohlenwasserstoffharz als Weichmacher.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische Cs-Monomere, weitere ungesättigte Verbindungen, die kationisch polymerisiert werden können, enthaltend Aromaten und/oder Terpene und/oder Alkene und/oder Cycloalkene.

In einer bevorzugten Ausführungsform der Erfindung ist das Kohlenwasserstoffharz ausgewählt aus der Gruppe bestehend aus aliphatischen Cs-Harzen und Kohlenwasserstoffharzen aus alpha-Methylstyrol und Styrol.

Das Kohlenwasserstoffharz weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, die nicht bereits als Weichmacher umfasst sind,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der schwefelvernetzbaren Kautschukmischung wird bevorzugt in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS). Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Als schwefelspendende Substanz können dabei alle dem Fachmann bekannten schwefelspendenden Substanzen verwendet werden. Enthält die Kautschukmischung eine schwefelspende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexylthiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die Begriffe "vulkanisiert" und "vernetzt" werden im Rahmen der vorliegenden Erfindung synonym verwendet.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer Bestandteilen des Vulkanisationssystems wie Schwefel und Vulkanisationsbeschleuniger hergestellt wird. Die wenigstens eine HTC-Kohle kann dabei wie Industrieruße eingemischt werden. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Ein weiterer Gegenstand der Erfindung ist ein Vulkanisat, welches durch Schwefelvulkanisation wenigstens einer erfindungsgemäßen Kautschukmischung inklusive aller beschriebenen Ausführungsformen erhalten wird.

Die Vulkanisation erfolgt unter dem Fachmann bekannten Bedingungen und mit bekannten Vorrichtungen.

Ein weiterer Gegenstand der vorliegenden Erfindung ist ein Fahrzeugreifen, der in wenigstens einem Bauteil wenigstens ein erfindungsgemäßes Vulkanisat aufweist. Der erfindungsgemäße Fahrzeugreifen kann in unterschiedlichen Bauteilen unterschiedliche Ausführungsformen der erfindungsgemäßen Kautschukmischung aufweisen.

Besonders bevorzugt weist er das Vulkanisat zumindest in der Seitenwand und/oder im Hornprofil und/oder einem inneren Bauteil auf. Unter den inneren Bauteilen eines Reifen werden u. a. Zwischenschichten, Innenseele (Innenschicht), Kernprofil, Gürtel, Schulterstreifen, Gürtelprofil, Karkasse, Wulstverstärker und Wulstprofil.

Besonders bei den genannten Bauteilen können die enthaltenen Industrieruße in vergleichsweise hohen Mengen, insbesondere 10 bis 100 phr, beispielsweise 10 bis 60 phr, oder vollständig durch HTC-Kohle ersetzt werden.

Der erfindungsgemäße Fahrzeugreifen kann das Vulkanisat auch im Laufstreifen aufweisen.

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet, wobei sie aufgrund des Anforderungsprofils insbesondere für Förderbänder geeignet ist.

Die Herstellung des erfindungsgemäßen Fahrzeugreifens erfolgt wie im Stand der Technik bekannt. Insbesondere werden die einzelnen Bauteile entsprechend in unvulkanisiertem Zustand vorgeformt und auf den Reifenrohling aufgebracht, welcher dann anschließend vulkanisiert wird.

Die Erfindung soll nun anhand von Vergleichs- und Ausführungsbeispielen, die in den folgenden Tabellen und Figuren beschrieben und zusammengefasst sind, näher erläutert werden. In den Tabellen 1 bis 4 sind dabei hergestellte HTC-Kohlen zusammengefasst, wobei Ausgangssubstanz (auch Substrat genannt), Temperatur (T) und Zeit (t) sowie die Zugabe von unterschiedlichen Salzen variiert sind. Die Salze wurden zuvor als wässrige Lösungen bereitgestellt und eingesetzt.

Die Kohlen in Tabelle 1 wurden in einem Autoklaven mit einem Fassungsvolumen von 200 mL hergestellt, wobei das Gewichtsverhältnis von Salz zu Ausgangssubstanz jeweils von 2,5 zu 1 betrug.

Die Kohlen in Tabelle 2 und 3 wurden in einem Autoklaven mit einem Fassungsvolumen von 2 L hergestellt, wobei das Gewichtsverhältnis von Salz zu Ausgangssubstanz jeweils von 1,2 zu 1 betrug.

In Tabelle 4 ist das Gewichtsverhältnis von Salz zu Ausgangssubstanz variiert, wobei die Kohlen ebenfalls in einem Autoklaven mit einem Fassungsvolumen von 2 L hergestellt wurden.

Zu den Kohlen sind jeweils der Kohlenstoff-Gehalt - bestimmt mittels Elemantaranalyse - und die BET-Oberfläche (BET-Oberfläche gemäß DIN ISO 9277, Berechnung über die Brunauer-Emmett-Teller (BET)-Isotherme) angegeben.

**Tabelle 1**

| **Kohle Nr.** | **Ausgangssubstanz** | **Salz** | **T** | **t** | **Ausbeute** | **Kohlenstoff-Gehalt** | **BET** |
|---|---|---|---|---|---|---|---|
| | | | **°C** | **h** | % | Gew.-% | m²/g |
| **1** | Biomasse ^{a)} | - | 180 | 12 | 45 | 57 | 7 |
| **2** | Biomasse ^{a)} | KCl/ZnCl2 | 180 | 12 | 60 | 65 | 52 |
| **3** | Biomasse ^{a)} | - | 220 | 12 | 67 | 71 | 10 |
| **4** | Biomasse ^{a)} | - | 220 | 24 | 23 | 72 | 6 |
| **5** | Kokosnussschale ^{b)} | - | 220 | 12 | 49 | 70 | n. m. |
| **6** | Biomasse ^{a)} | KCl/ZnCl2 | 220 | 24 | 44 | 68 | 31 |
| **7** | Coconit 300 ^{c)} | ZnCl2 | 180 | 12 | 42 | 65 | 131 |
| **8** | Reishülse ^{d)} | ZnCl2 | 180 | 12 | 39 | 52 | 135 |
| n. m. = nicht messbar | | | | | | | |

**Tabelle 2**

| **Kohle Nr.** | **Ausgangssubstanz** | **Salz** | **T** | **t** | **Ausbeute** | **Kohlenstoff -Gehalt** | **BET** |
|---|---|---|---|---|---|---|---|
| | | | **°C** | **h** | % | Gew.-% | m²/g |
| **9** | Glucose ^{e)} | - | 180 | 12 | 37 | 62 | n. m. |
| **10** | Glucose ^{e)} | ZnCl2 | 180 | 12 | 45 | 65 | 125 |
| **11** | Cellulose ^{f)} | - | 180 | 12 | 51 | 51 | 10 |
| **12** | Cellulose ^{f)} | ZnCl2 | 180 | 12 | 48 | 64 | 104 |
| **13** | Reishülse ^{d)} | - | 180 | 12 | 63 | 45 | 11 |
| **14** | Reishülse ^{d)} | ZnCl2 | 180 | 12 | 60 | 48 | 65 |
| **15** | Coconit ^{c)} | - | 180 | 12 | 61 | 60 | 4 |
| **16** | Coconit ^{c)} | ZnCl2 | 180 | 12 | 52 | 67 | 98 |

**Tabelle 3**

| **Kohle Nr.** | **Salz** | **T** | **t** | **Ausbeute** | **Kohlenstoff-Gehalt** | **BET** |
|---|---|---|---|---|---|---|
| | | °C | h | % | Gew.-% | m²/g |
| **17** | - | 180 | 4 | 56 | 58 | 3 |
| **18** | ZnCl2 | 180 | 4 | 54 | 67 | 98 |
| **19** | - | 180 | 12 | 61 | 60 | 4 |
| **20** | ZnCl2 | 180 | 12 | 52 | 67 | 98 |
| **21** | - | 180 | 20 | 55 | 58 | 8 |
| **22** | ZnCl2 | 180 | 20 | 56 | 67 | 103 |
| **23** | - | 220 | 20 | 49 | 69 | 52 |
| **24** | ZnCl2 | 220 | 20 | 50 | 70 | 135 |
| **25** | - | 220 | 36 | 48 | 69 | 44 |
| **26** | ZnCl2 | 220 | 36 | 50 | 70 | 186 |
| **27** | - | 200 | 12 | 48 | 67 | 50 |
| **28** | ZnCl2 | 200 | 12 | 47 | 68 | 112 |
| **29** | - | 220 | 12 | 49 | 68 | 51 |
| **30** | ZnCl2 | 220 | 12 | 47 | 69 | 118 |
| **31** | LiCl | 180 | 12 | 53 | 68 | 24 |
| **32** | LiCl/ZnCl2 | 180 | 12 | 52 | 68 | 68 |
| **33** | KCl | 180 | 12 | 56 | 66 | 34 |
| **34** | KCl/ZnCl2 | 180 | 12 | 54 | 68 | 50 |
| **35** | NaCl | 180 | 12 | 57 | 67 | 37 |
| **36** | NaCl/ZnCl2 | 180 | 12 | 52 | 68 | 50 |

In Tabelle 3 wurde als Ausgangssubstanz Coconit 300 ^{c)} verwendet.

**Tabelle 4**

| **Kohle Nr.** | **Gew.-Verh. Salz zu Ausgangss.** | **T** | **t** | **Ausbeute** | **Kohlenstoff-Gehalt** | **BET** |
|---|---|---|---|---|---|---|
| | | **°C** | **h** | % | Gew.-% | m²/g |
| **37** | 0,2 zu 1 | 180 | 12 | 51 | 68 | 49 |
| **38** | 0,4 zu 1 | 180 | 12 | 51 | 66 | 55 |
| **39** | 0,8 zu 1 | 180 | 12 | 52 | 69 | 66 |
| **40** | 1,2 zu 1 | 180 | 12 | 52 | 67 | 98 |
| **41** | 1,8 zu 1 | 180 | 12 | 53 | 66 | 21 |

In Tabelle 4 wurde als Ausgangssubstanz Coconit 300 ^{c)} und als Salz ZnCl₂ verwendet.

### Verwendete Substanzen

a) Biomasse: Gemisch aus Gras und Binsen von Grünschnittflächen aus dem nordöstlichen Gebiet von Oldenburg. Enthält rund 70 % gemeinen Binsen (Juncus effusus), 25-30 % Gräser (Poaceae, Cyperaceae) und kleinere Mengen und Spuren von Kräutern. Die verschiedenen Gräser und Binsen wurden bereits gemischt und zerkleinert zu Partikeln mit einer Größe von etwa 0,2 mm eingesetzt.
b) Kokosnussschale: Kokosnussschalengranulate der Größe kleiner 1 Inch von Mahlwerk Neubauer-Friedrich Geffers GmbH
c) Coconit 300: Kokosnussschalenmehl von Mahlwerk Neubauer-Friedrich Geffers GmbH
d) Reishülsen: von Fa. Kazulube
e) Glucose: D(+)-Glucose anhydrous, Fa. VWR
f) Cellulose: α-cellulose Pulver ("powder"), Fa. Sigma Aldrich

Eine HTC-Kohle, die mittels wenigstens eines Salzes hergestellt wurde, weist eine verstärkte Oberflächenrauheit und eine optimierte Oberflächenfunktionalität auf.

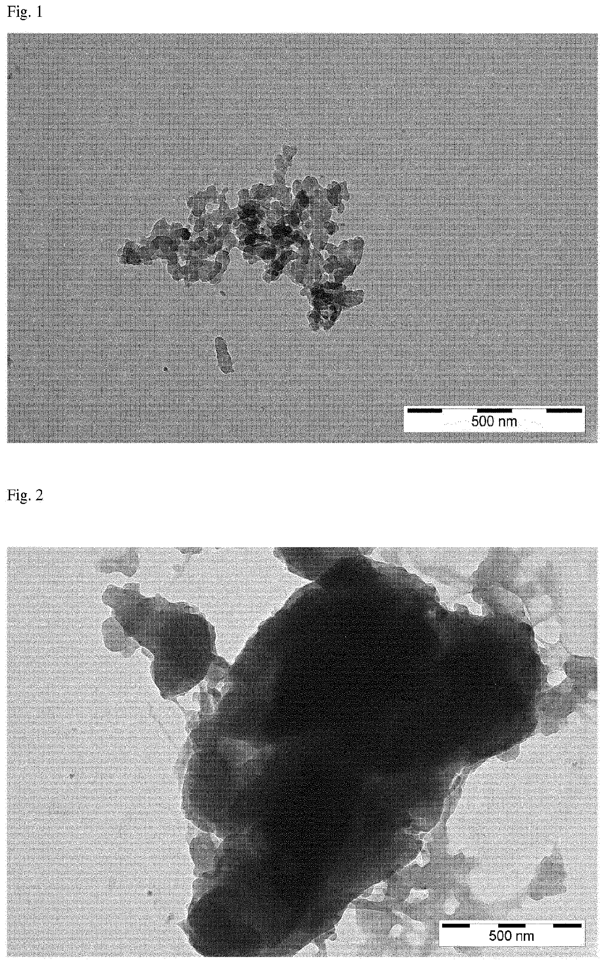

Die Oberflächenrauheit lässt sich qualitativ anhand von TEM-Bildern durch Vergleich bewerten, wie beispielhaft in den Figuren 1 und 2 gezeigt.

Fig. 1 zeigt eine HTC-Kohle, die unter Verwendung des Salzgemisches ZnCl₂/KCl hergestellt (Reaktion bei 180 °C für 12 Stunden) wurde.

Fig. 2 zeigt eine Kohle die ohne Verwendung des Salzgemisches unter ansonsten gleichen Bedingungen hergestellt wurde (Reaktion bei 180 °C für 12 Stunden).

Wie an dem Vergleich von Fig. 1 mit Fig. 2 erkennbar, weist die HTC-Kohle, die unter Verwendung wenigstens eines Salzes hergestellt wurde, eine höhere Rauheit auf.

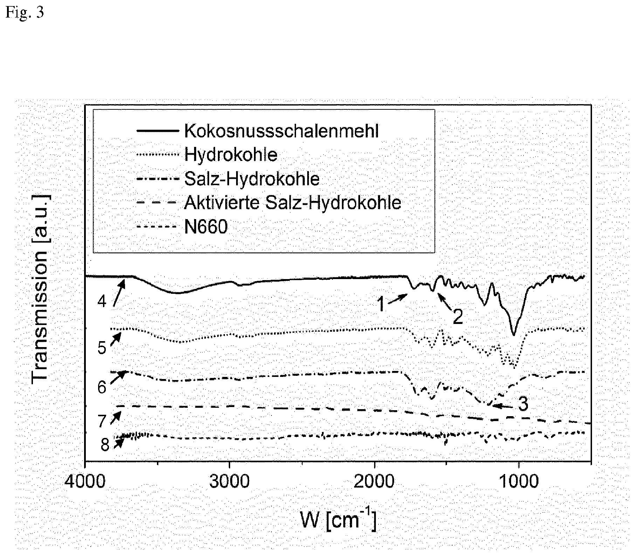

In Fig. 3 ist ein beispielhaftes FTIR-Spektrum gezeigt. Hierbei ist die Transmission qualitativ (Einheit a. u. = "arbitrary units") gegen die Wellenzahl (abgekürzt W) (Einheit cm⁻¹) aufgetragen.

Gezeigt sind die Spektren bzw. deren relevante Ausschnitte für folgende Substanzen:
- für die Ausgangssubstanz Kokosnussschalenmehl 4;
- für eine Hydrokohle 5, die durch hydrothermale Karbonisierung von Kokosnussschalenmehl (Reaktion bei 180 °C für 12 Stunden) ohne Salz hergestellt wurde
- für eine Salz-Hydrokohle 6, die unter Verwendung des Salzes ZnCl₂ aber unter ansonsten gleichen Bedingungen (Reaktion bei 180 °C für 12 Stunden; Kokosnussschalenmehl) hergestellt wurde;
- für eine aktivierte Salz-Hydrokohle 7, die unter Verwendung des Salzgemisches LiCl/ZnCl₂ (Reaktion bei 180 °C für 12 Stunden; Kokosnussschalenmehl) hergestellt und anschließender Aktivierung durch Wasserdampf bei 500 °C für 1 Stunde erhalten wurde;
- für den Industrieruß N 660 8.

In Fig. 3 ist erkennbar, dass eine Salz-Hydrokohle 6 im Vergleich zu in einem weiteren Schritt aktivierter Salz-Hydrokohle 7 noch funktionelle Gruppen aufweist, was an den Banden für Carbonyl-Verbindungen 1 und den Banden für sauerstoffhaltige funktionelle Gruppen 3 erkennbar ist. Gleichzeitig weist die mit Salz hergestellte Kohle im FTIR-Spektrum Banden für C=C-Doppelbindungen 2 auf. Auch im Spektrum für den Industrieruß 8 sind Banden für sauerstoffhaltige funktionelle Gruppen 3 und für C=C-Doppelbindungen 2 vorhanden, sodass die Salz-Hydrokohle 6 damit Industrierußen chemisch zumindest ähnlich ist. Damit weist die Salz-Hydrokohle funktionelle Gruppen auf, die möglicherweise zu verstärkten Wechselwirkungen in einer Kautschukmischung führen. Im Vergleich zur Hydrokohle (ohne Salz) 5 sieht man, dass durch Verwendung des Salzes zwar ein Teil der Funktionalität verloren geht und nur die oben beschriebenen Gruppen erhalten bleiben, wobei aber die Bande für sauerstoffhaltige funktionelle Gruppen 3 bei der Salz-Hydrokohle 6 sogar stärker ausgeprägt ist.

Es ist zudem denkbar, dass der Verlust der möglicherweise störenden Gruppen zu einer verbesserten Interaktivität der Salz-Hydrokohle in einer Kautschukmischung führt.

Die in Tabelle 1 zusammengefassten HTC-Kohlen wurden in Kautschukmischungen eingemischt, deren allgemeine Rezepturen in Tabelle 5 gezeigt sind. Hierbei wurde bei der Wahl der Kohlen der Fokus aus ökonomischen Gründen auf Nachhaltigkeit gelegt und damit einige Abfallbiomassen als Ausgangssubstanzen ausgewählt. Die mit "E" gekennzeichneten Mischungen sind hierbei Mischungen, die wenigstens eine HTC-Kohle als Füllstoff enthalten, während es sich bei den mit "V" gekennzeichneten Mischungen um Vergleichsmischungen enthaltend Industrieruß als Füllstoff handelt. Bei den Mischungen E6 und E14 handelt es sich um erfindungsgemäße Mischungen.

Die Mischungsherstellung erfolgte nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. Diese Grundmischung wurde in einem weiteren Schritt nochmals durchmischt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation hergestellt und mit diesen Prüfkörpern für die Kautschukindustrie typische Materialeigenschaften bestimmt, die in den Tabellen 6 und 7 zusammengefasst sind. Für die obig beschriebenen Tests an Prüfkörpern wurden folgende Testverfahren angewandt:
- Dichte gemäß Archimedes-Prinzip
- Shore-A-Härte bei Raumtemperatur RT und 70 °C mittels Durometer gemäß ISO 868
- Rückprallelastizität bei RT und 70°C gemäß ISO 4662
- Spannungswerte bei 50% und 100% Dehnung bei Raumtemperatur gemäß ISO 37 bzw. ASTM D 412 (M50 und M100)

**Tabelle 5**

| **Bestandteile** | **Einheit** | **V1** | **E1-E8** | **V2** | **E9-E16** |
|---|---|---|---|---|---|
| SSBR ^{g)} | phr | 100 | 100 | 100 | 100 |
| Ruß N 660 | phr | 60 | - | 40 | - |
| Kohle - variiert ^{h)} | phr | - | 60 | - | 40 |
| TDAE Öl | phr | 3 | 3 | 3 | 3 |
| Sonstige Zusatzstoffe ⁱ⁾ | phr | 11 | 11 | 11 | 11 |
| Beschleuniger TBBS | phr | 0,7 | 0,7 | 0,7 | 0,7 |
| Schwefel | phr | 1,7 | 1,7 | 1,7 | 1,7 |
| Verwendete Substanzen | | | | | |
| g) SSBR: Nipol NS 210R, Fa. Zeon Europe GmbH | | | | | |
| h) Kohlen aus Tabelle 1; wie in den Tabellen 6 bis 9 angegeben, jeweils in den angegebenen Mengen von 60 oder40 phr | | | | | |
| i) Alterungsschutzmittel, Ozonschutzwachs, Zinkoxid, Stearinsäure | | | | | |

Wie an den Tabellen 6 und 7 erkennbar, kann Industrieruß (N 660) (Mischungen V1 und V2) komplett durch HTC-Kohlen ausgetauscht werden, wobei sich durch die geringeren Rückprallelastizitäten bei Raumtemperatur verbesserte Nassgriffindikatoren, insbesondere für den Einsatz in Fahrzeugreifen, ergeben. Gleichzeitig bleiben die Steifigkeit (Werte für die Härten, M 50 und M100) und damit die Handling-Indikatoren und die Rückprallelastizität bei 70 °C auf einem vergleichbaren, für den Einsatz in Fahrzeugreifen akzeptablem, Niveau. Zudem weisen die erfindungsgemäßen Kautschukmischungen gegenüber den jeweiligen Vergleichsmischungen eine verringerte Dichte auf, was wiederum zu leichteren und damit rollwiderstandsoptimierten Bauteilen für Fahrzeugreifen führt.

**Tabelle 6**

| | | **V1** | **E1** | **E2** | **E3** | **E4** | **E5** | **E6** | **E7** | **E8** |
|---|---|---|---|---|---|---|---|---|---|---|
| Kohle Nr. aus Tab. 1 | | - | **1** | **2** | **3** | **4** | **5** | **6** | **7** | **8** |
| | | | | | | | | | | |

| **Eigenschaften** | **Einheit** | | | | | | | | | |
|---|---|---|---|---|---|---|---|---|---|---|
| Dichte | g/cm3 | 1,16 | 1,07 | 1,07 | 1,06 | 1,05 | 1,07 | 1,06 | 1,08 | 1,09 |
| Härte RT | Shore A | 62,1 | 65,7 | 65,0 | 59,2 | 57,0 | 65,4 | 64,1 | 68,2 | 62,8 |
| Härte 70 °C | Shore A | 58,8 | 59,0 | 59,4 | 52,3 | 47,6 | 56,2 | 55,6 | 62,0 | 56,7 |
| Rückpr. RT | % | 52,2 | 48,4 | 50,6 | 51,2 | 50,8 | 50,8 | 51,8 | 48,4 | 51,8 |
| Rückpr. 70 °C | % | 59,4 | 56,0 | 53,6 | 56,2 | 53,2 | 52,0 | 55,2 | 56,4 | 56,4 |
| M50 | MPa | 1,4 | 1,9 | 1,9 | 1,3 | 1,1 | 1,6 | 1,7 | 1,8 | 1,4 |
| M100 | MPa | 2,4 | 2,4 | 3,0 | 1,7 | 1,4 | 2,0 | 2,4 | 2,6 | 1,9 |

**Tabelle 7**

| | | **V2** | **E9** | **E10** | **E11** | **E12** | **E13** | **E14** | **E15** | **E16** |
|---|---|---|---|---|---|---|---|---|---|---|
| Kohle Nr. aus Tab. 1 | | **-** | **1** | **2** | **3** | **4** | **5** | **6** | **7** | **8** |
| | | | | | | | | | | |

| **Eigenschaften** | **Einheit** | | | | | | | | | |
|---|---|---|---|---|---|---|---|---|---|---|
| Dichte | g/cm³ | 1,10 | 1,05 | 1,04 | 1,04 | 1,03 | 1,04 | 1,04 | 1,02 | 1,07 |
| Härte RT | Sh A | 51,6 | 59,2 | 55,9 | 51,8 | 50,6 | 56,7 | 55,1 | 54,5 | 54,1 |
| Härte 70 °C | Sh A | 49,3 | 53,6 | 46,8 | 48,2 | 44,6 | 48,6 | 47,9 | 45,2 | 46,5 |
| Rückpr. RT | % | 53,2 | 52,0 | 55,2 | 54,0 | 54,8 | 54,6 | 55,2 | 53,0 | 56,4 |
| Rückpr. 70 °C | % | 61,6 | 58,4 | 57,2 | 59,4 | 58,8 | 57,0 | 58,4 | 55,0 | 58,2 |
| M 50 | MPa | 1,0 | 1,4 | 1,2 | 1,0 | 0,9 | 1,1 | 1,2 | 1,0 | 1,1 |

Ferner können die Hydrokohlen, die in den Tabellen 2 bis 4 dargestellt sind, als weitere Ausführungsbeispiele in der erfindungsgemäßen Kautschukmischung eingesetzt werden.

### Bezugszeichenliste

### (Teil der Beschreibung)

1 Bande für Carbonyl-Verbindung C=O (im FTIR Spektrum)
2 Bande für C=C-Doppelbindung (im FTIR-Spektrum)
3 Bande für Sauerstoffhaltige funktionelle Gruppen -O- (im FTIR-Spektrum)
4 Ausschnitt aus dem FTIR-Spektrum für die Ausgangssubstanz Kokosnussschalenmehl
5 Ausschnitt aus dem FTIR-Spektrum für Hydrokohle: HTC (12 h, 180 °C)
6 Ausschnitt aus dem FTIR-Spektrum für Salz-Hydrokohle: HTC (12 h, 180 °C) mit Zinkchlorid
7 Ausschnitt aus dem FTIR-Spektrum für aktivierte Salz-Hydrokohle: HTC (12 h, 180 °C) mit Lithiumchlorid/Zinkchlorid und Aktiviert (1 h, 500 °C) mit Wasserdampf
8 Ausschnitt aus dem FTIR-Spektrum für den Industrieruß N 660

## Patentansprüche

1. Schwefelvernetzbare Kautschukmischung, enthaltend wenigstens folgende Bestandteile:
- Wenigstens einen Dienkautschuk;
- Wenigstens eine Kohle (HTC-Kohle), die mittels hydrothermaler Karbonisierung von wenigstens einer Ausgangssubstanz hergestellt ist,
- wobei bei der hydrothermalen Karbonisierung wenigstens ein Metallhalogenid verwendet wird, wobei die hydrothermale Karbonisierung bei einer Temperatur von 210 bis 230 °C durchgeführt wird, und wobei die Kohle eine Stickstoff-Oberfläche (BET-Oberfläche gemäß DIN ISO 9277) von 20 bis 200 m²/g aufweist.

2. Schwefelvernetzbare Kautschukmischung nach Anspruch 1, **dadurch**
**gekennzeichnet, dass** es sich bei dem Metallhalogenid wenigstens um ZnCl₂ handelt.

3. Schwefelvernetzbare Kautschukmischung nach einem der Ansprüche 1 oder 2,
**dadurch gekennzeichnet, dass** als wenigstens ein Metallhalogenid ein Salz verwendet wird, welches ausgewählt ist aus der Gruppe bestehend aus LiCI, NaCl und KCI.

4. Schwefelvernetzbare Kautschukmischung nach einem der vorherigen Ansprüche,
**dadurch gekennzeichnet, dass** wenigstens eine Biomasse und/oder deren Abbauprodukt(e) als Ausgangssubstanz verwendet wird.

5. Schwefelvernetzbare Kautschukmischung nach Anspruch 4,**dadurch gekennzeichnet, dass** die Biomasse ausgewählt ist aus der Gruppe bestehend aus Getreideschalen, Nussschalen, Fruchtschalen, Grünschnitt, Holzabfällen wie Sägemehl und Algen.

6. Schwefelvernetzbare Kautschukmischung nach einem der vorherigen Ansprüche, **dadurch gekennzeichnet, dass** zumindest eine Ausgangssubstanz aus der Gruppe bestehend aus Lignin, Cellulose, Hemicellulose und Zucker, insbesondere Glucose, gewählt wird.

7. Schwefelvernetzbare Kautschukmischung nach einem der vorherigen Ansprüche, **dadurch gekennzeichnet, dass** die hydrothermale Karbonisierung bei einem Druck von 2 bis 20 bar durchgeführt wird.

8. Schwefelvernetzbare Kautschukmischung nach einem der vorherigen Ansprüche, **dadurch gekennzeichnet, dass** sie neben der HTC-Kohle keinen weiteren verstärkenden Füllstoff, insbesondere 0 phr Industrieruß und 0 phr Kieselsäure, enthält.

9. Schwefelvernetzbare Kautschukmischung nach einem der Ansprüche 1 bis 7, **dadurch gekennzeichnet, dass** sie wenigstens einen weiteren verstärkenden Füllstoff enthält, der ausgewählt ist aus Kieselsäure und Industrieruß.

10. Schwefelvernetzbare Kautschukmischung nach einem der vorherigen Ansprüche, **dadurch gekennzeichnet, dass** sie 5 bis 100 phr wenigstens einer HTC-Kohle enthält.

11. Vulkanisat, welches durch Schwefelvulkanisation wenigstens einer Kautschukmischung nach einem der Ansprüche 1 bis 10 erhalten wird.

12. Fahrzeugreifen, der in wenigstens einem Bauteil wenigstens ein Vulkanisat nach Anspruch 11 aufweist.

13. Fahrzeugreifen nach Anspruch 12, wobei er das Vulkanisat wenigstens in der Seitenwand und/oder im Hornprofil und/oder einem inneren Bauteil aufweist.

## Claims

1. Sulfur-crosslinkable rubber mixture containing at least the following constituents:
- at least one diene rubber;
- at least one char (HTC char) obtained by hydrothermal carbonization of at least one starting substance,
- wherein at least one metal halide is used in the hydrothermal carbonization,
wherein the hydrothermal carbonization is carried out at a temperature of 210°C to 230°C and wherein the char has a nitrogen surface area (BET surface area according to DIN ISO 9277) of 20 to 200 m²/g.

2. Sulfur-crosslinkable rubber mixture according to Claim 1, **characterized in that** the metal halide is at least ZnCl₂.

3. Sulfur-crosslinkable rubber mixture according to either of Claims 1 and 2, **characterized in that** the at least one metal halide used is a salt selected from the group consisting of LiCI, NaCl and KCI.

4. Sulfur-crosslinkable rubber mixture according to any of the preceding claims, **characterized in that** at least one biomass and/or the decomposition product(s) thereof is used as the starting substance.

5. Sulfur-crosslinkable rubber mixture according to Claim 4, **characterized in that** the biomass is selected from the group consisting of cereal husks, nut husks, fruit husks, green waste, wood wastes such as sawdust, and algae.

6. Sulfur-crosslinkable rubber mixture according to any of the preceding claims, **characterized in that** at least one starting substance is selected from the group consisting of lignin, cellulose, hemicellulose and sugar, in particular glucose.

7. Sulfur-crosslinkable rubber mixture according to any of the preceding claims, **characterized in that** the hydrothermal carbonization is carried out at a pressure of 2 to 20 bar.

8. Sulfur-crosslinkable rubber mixture according to any of the preceding claims, **characterized in that** the rubber mixture contains no further reinforcing fillers in addition to the HTC char, in particular 0 phr of carbon black and 0 phr of silica.

9. Sulfur-crosslinkable rubber mixture according to any of Claims 1 to 7, **characterized in that** it contains at least one further reinforcing filler selected from silica and carbon black.

10. Sulfur-crosslinkable rubber mixture according to any of the preceding claims, **characterized in that** it contains 5 to 100 phr of at least one HTC char.

11. Vulcanizate obtained by sulfur vulcanization of at least one rubber mixture according to any of Claims 1 to 10.

12. Vehicle tire which comprises in at least one component at least one vulcanizate according to Claim 11.

13. Vehicle tire according to Claim 12, wherein said tire comprises the vulcanizate at least in the sidewall and/or in the flange profile and/or in an internal component.

## Revendications

1. Mélange de caoutchouc réticulable au soufre, contenant au moins les constituants suivants :
- au moins un caoutchouc de diène ;
- au moins un charbon (charbon HTC), qui est fabriqué par carbonisation hydrothermale d'au moins une substance de départ,
- lors de la carbonisation hydrothermale, au moins un halogénure métallique étant utilisé, la carbonisation hydrothermale étant réalisée à une température de 210 à 230 °C, et le charbon présentant une surface à l'azote (surface BET selon la norme DIN ISO 9277) de 20 à 200 m²/g.

2. Mélange de caoutchouc réticulable au soufre selon la revendication 1, **caractérisé en ce que** l'halogénure métallique est au moins ZnCl₂.

3. Mélange de caoutchouc réticulable au soufre selon l'une quelconque des revendications 1 ou 2, **caractérisé en ce qu'**un sel, qui est choisi dans le groupe constitué par LiCl, NaCl et KCI, est utilisé en tant qu'au moins un halogénure métallique.

4. Mélange de caoutchouc réticulable au soufre selon l'une quelconque des revendications précédentes, **caractérisé en ce qu'**au moins une biomasse et/ou son ou ses produits de décomposition est/sont utilisé(e/s) en tant que substance de départ.

5. Mélange de caoutchouc réticulable au soufre selon la revendication 4, **caractérisé en ce que** la biomasse est choisie dans le groupe constitué par les enveloppes de céréales, les coquilles de noix, les écorces de fruits, les déchets verts coupés, les déchets de bois tels que la sciure et les algues.

6. Mélange de caoutchouc réticulable au soufre selon l'une quelconque des revendications précédentes, **caractérisé en ce qu'**au moins une substance de départ est choisie dans le groupe constitué par la lignine, la cellulose, l'hémicellulose et les sucres, en particulier le glucose.

7. Mélange de caoutchouc réticulable au soufre selon l'une quelconque des revendications précédentes, **caractérisé en ce que** la carbonisation hydrothermale est réalisée à une pression de 2 à 20 bars.

8. Mélange de caoutchouc réticulable au soufre selon l'une quelconque des revendications précédentes, **caractérisé en ce qu'**outre le charbon HTC, il ne contient pas de charge renforçante supplémentaire, notamment 0 phr de noir de carbone industriel et 0 phr de silice.

9. Mélange de caoutchouc réticulable au soufre selon l'une quelconque des revendications 1 à 7, **caractérisé en ce qu'**il contient au moins une charge renforçante supplémentaire, qui est choisie parmi la silice et le noir de carbone industriel.

10. Mélange de caoutchouc réticulable au soufre selon l'une quelconque des revendications précédentes, **caractérisé en ce qu'**il contient 5 à 100 phr d'au moins un charbon HTC.

11. Vulcanisat, qui est obtenu par vulcanisation au soufre d'au moins un mélange de caoutchouc selon l'une quelconque des revendications 1 à 10.

12. Pneu de véhicule, qui comprend dans au moins un composant au moins un vulcanisat selon la revendication 11.

13. Pneu de véhicule selon la revendication 12, celui-ci comprenant le vulcanisat au moins dans la paroi latérale et/ou dans le profilé de rebord et/ou dans un composant interne.
